# FASCICULE DE BREVET EUROPEEN

(11) **EP 0 993 181 B1**
(45) Date de publication et mention de la délivrance du brevet: **10.08.2005**
(21) Numéro de dépôt: 99402462.8
(22) Date de dépôt: 07.10.1999
(51) Int. Cl.: H04N 5/272

(54) **Amélioration du chromatisme d'une image incrustée sur une image vidéo**
Farbverbesserung eines einem Videobild überlagerten Bildes
Improving chromatism of a picture superimposed on a video picture

(30) Priorité: 09.10.1998 FR 9812692
(43) Date de publication de la demande: 12.04.2000
(73) Titulaire: STMicroelectronics S.A., 92120 Montrouge (FR)
(72) Inventeur: Vos, Mark, 75116 Paris (FR)
(74) Mandataire: Ballot, Paul

(56) Documents cités:
- EP-A- 0 330 732
- WO-A-86/06233
- US-A- 5 282 037
- US-A- 5 608 464

## Description

La présente invention se rapporte à un procédé d'amélioration du chromatisme des éléments d'image incrustés sur une image vidéo et à un circuit électronique permettant de mettre en place le procédé en question. Par amélioration du chromatisme d'éléments d'image, on désigne une augmentation du nombre de couleurs qui peuvent définir un élément d'image incrusté.

Plus particulièrement l'invention concerne un procédé et un circuit d'amélioration du chromatisme des éléments d'image d'origine numérique incrustés sur une image vidéo permettant d'améliorer, en augmentant le nombre de couleurs disponibles pour créer les incrustations, la qualité des incrustations sur une image vidéo classique.

Une image vidéo est constituée d'une succession de lignes de pixels. Les pixels sont des éléments d'image élémentaires. Dans les systèmes de télévision couleur, chaque pixel est porteur d'informations de luminance et de chrominance qui permettent de déterminer la luminosité et la couleur de chaque point de l'image. Dans les systèmes de télévision les plus utilisés, l'image évolue selon un principe de balayage horizontal de l'écran. Qu'il s'agisse du système de télévision NTSC, du système de télévision PAL, ou encore du système de télévision SECAM, chaque image affichée résulte de l'affichage alternatif de deux images partielles distinctes appelées trames.

D'une façon générale, il existe une première trame, dite trame impaire, et une seconde trame, dite trame paire.

La nature même des images de télévision, à savoir, l'entrelacement de deux images partielles, donne naissance à des problèmes de qualité de l'image, et notamment à un problème de scintillement (FLICKER dans la littérature anglaise). Ainsi, dans un cas extrême, une ligne de pixels noirs sur un fond d'image blanc donnera la désagréable impression à l'oeil humain d'apparaître et de disparaître, particulièrement si cette ligne est observée de près.

Par ailleurs, il est de plus en plus fréquent d'afficher des éléments d'image incrustés d'origine numérique sur des images vidéo. Ces éléments d'images incrustés sont appelés des OSD (On Screen Display, dans la littérature anglaise). Chaque pixel d'un OSD se caractérise par trois valeurs Y, U et V pour la détermination de la luminosité et de la couleur, et d'une valeur de transparence MW.

Les OSD servent, par exemple, à indiquer de façon permanente ou non l'avancement d'un événement sportif. Ils indiquent notamment le score d'un match. Ils sont également utilisés par certaines chaînes de télévision qui indiquent, grâce à un OSD représentant leur logo, quelle chaîne de télévision est visible à l'écran.

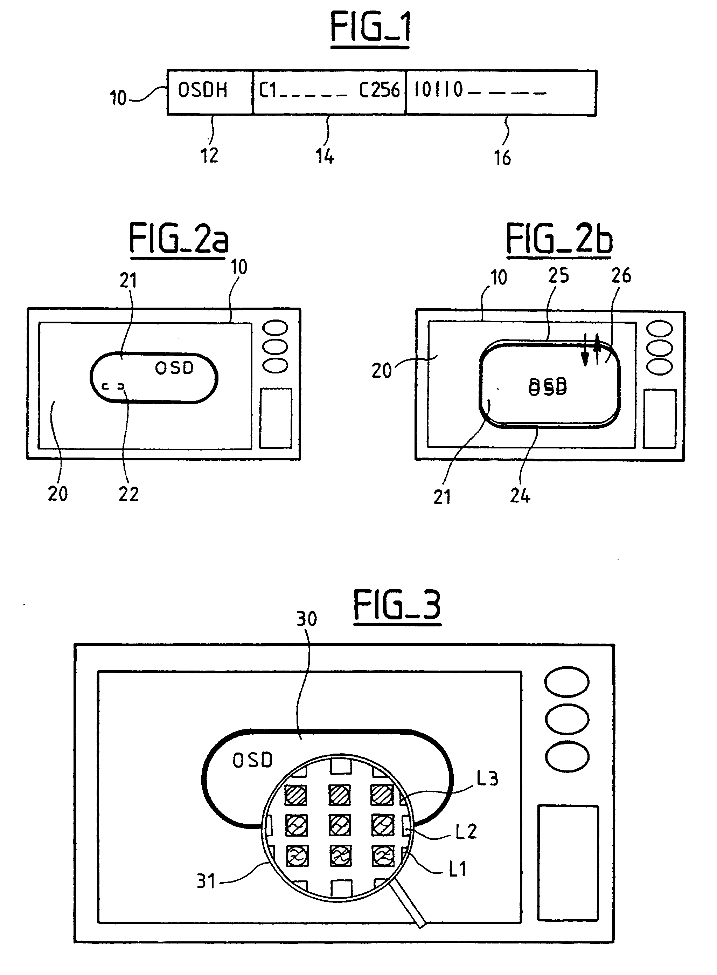

La figure 1 représente schématiquement la structure courante du code d'un OSD. Un train binaire 10 contenant les codes nécessaires à l'affichage d'un OSD est composé le plus souvent de trois ensembles de bits ayant des fonctions différentes.

Un premier ensemble de bits 12 constitue l'en-tête de l'OSD (OSD - header dans la littérature anglaise).

L'en-tête 12 de l'OSD comporte notamment des informations relatives au nombre de bits nécessaires pour définir un pixel, aux coordonnées de certains points caractéristiques de l'OSD...

Un deuxième ensemble de bits 14 sert à définir la gamme de couleurs qui sera utilisée lors de l'affichage de l'OSD. Toutes les couleurs qui seront utilisées sont mémorisées dans une mémoire spécifique, dite table des couleurs disponibles (Color Look-Up Table, ou CLUT dans la littérature anglaise). Elle est le plus souvent limitée à 256 lignes de mémoire, chaque ligne de mémoire contenant les valeurs des bits correspondant à une couleur programmée dans la table grâce au deuxième ensemble de bits 14. Le choix de la taille de la table de couleurs disponibles résulte d'un compromis entre la rapidité d'accès à la table et le nombre de couleurs nécessaires pour assurer une qualité correcte pour l'OSD.

Enfin, un troisième ensemble de bits 16 est constitué des adresses des lignes de mémoire de la table des couleurs disponibles contenant la couleur appropriée pour chaque pixel de l'OSD.

Si les problèmes de scintillement existent, comme il vient d'être dit, dans les images de télévision purement analogiques, ils sont faibles par rapport aux phénomènes de scintillement qui peuvent apparaître lorsqu'on affiche des éléments d'image incrustés sur un fond d'image vidéo.

En effet, l'atténuation systématique de contrastes dans les images vidéo, du fait de la présence de caméra dans le cycle de génération de l'image, ne se rencontre pas lors de la création d'un OSD. Deux motifs de couleurs éloignées dans le spectre des fréquences visibles peuvent être juxtaposés. Ainsi, lorsque des éléments d'image d'origine numérique sont incrustés sur l'image vidéo, d'importants contrastes entre deux lignes consécutives peuvent apparaître. En effet, lorsqu'un OSD est créé, le fond de l'image vidéo sur lequel l'OSD sera affiché ne peut généralement pas être connu. Ainsi, dans des cas extrêmes, un OSD bleu peut être affiché alors que le fond de l'image vidéo est rouge. D'autre part à l'intérieur même d'un OSD, rien n'interdit au concepteur de l'OSD de juxtaposer deux lignes qui contrastent fortement.

Les figures 2a et 2b sont des illustrations de problèmes que l'on peut rencontrer lors de l'affichage d'un OSD sur un fond d'image vidéo.

A la figure 2a est représentée un écran de télévision 10 qui affiche un OSD 21 sur un fond d'image vidéo 20. L'OSD 21 présente notamment une zone à fond blanc sur laquelle se détache un fin trait noir d'une largeur de un pixel. C'est typiquement le cas où l'effet de scintillement est le plus visible. Du fait de l'entrelacement des trames paires et impaires, le fin trait noir 22 apparaît et disparaît de façon suffisamment lente pour que ce phénomène soit détecté par l'oeil humain.

La figure 2b représente un autre type de problèmes lié à l'affichage d'un OSD sur un fond d'image vidéo.

Sur fond d'une image vidéo 20 un OSD 21, composé d'un premier motif 24 affiché avec la trame paire et d'un second motif 25 affiché avec la trame impaire donne une impression de tremblement 26. L'OSD semble descendre et monter d'une amplitude d'un pixel à un rythme imposé par la fréquence de rafraîchissement des trames de l'image.

Ce problème de tremblement (flutter dans la littérature anglaise), a des origines identiques à celles qui créent problème de scintillement. Le phénomène de tremblement apparaît lorsque la même image est affichée par la trame paire et par la trame impaire. Selon le système de télévision utilisé, la trame paire apparaît tous les 1/25 secondes ou 1/30 secondes en alternance avec la trame impaire. L'oeil humain détecte alors un mouvement de tremblement dû à l'apparition de l'OSD alternativement sur un ensemble de lignes puis sur l'ensemble de lignes directement voisines.

Ces phénomènes de scintillement et de tremblement sont principalement sensibles lorsqu'on affiche de longs traits horizontaux à l'écran, ce qui est fréquent dans les OSD.

Pour résoudre ces problèmes, qui sont des problèmes dits de transitions verticales dans la définition de l'image lors de l'affichage d'un ou plusieurs OSD, il existe différentes solutions connues. Il est par exemple possible d'appliquer des filtres mathématiques qui modifient les valeurs de certains pixels en faisant intervenir, après pondérations, les valeurs de pixels voisins pour le calcul des nouvelles valeurs des pixels concernés. Il existe d'ailleurs des circuits qui permettent une détection automatique des contrastes de couleurs trop importants entre des lignes qui se succèdent. Ces circuits effectuent alors automatiquement les opérations de pondération associées au filtre mathématique approprié.

Afin d'éviter les transitions brutales de couleurs qui donnent naissance aux phénomènes précédemment exposés, il est également possible d'intervenir sur la transparence du pixel d'un OSD. Cette solution est appliquée aux lignes ou aux groupes de lignes qui constituent la zone frontière entre un OSD et une image vidéo. Lorsque on intervient sur une unique ligne frontière entre l'OSD et l'image vidéo, la transparence du pixel de l'OSD est le plus souvent de 50%. Chaque pixel de l'image finale, situé sur la frontière en question, présente ainsi une contribution équilibrée des pixels de l'image vidéo et des pixels de l'OSD. Lorsque plusieurs lignes successives de la zone frontière sont concernées, la transparence des pixels de l'OSD croît lorsque on se rapproche des pixels de l'image vidéo.

Un exemple d'une telle technique est représenté à la figure 3. A la figure 3, un OSD 30 est constitué de portions de lignes de pixels: trois premières lignes de l'OSD 30 numérotées L1, L2 et L3, ont les mêmes valeurs Y, U et V qui caractérisent la luminance et la chrominance de chaque pixel. Les lignes de pixels ne diffèrent que par leur transparence MW. La transparence des pixels de la ligne L3, est par exemple de l'ordre de 25%. La transparence des pixels de la ligne L2 est par exemple de l'ordre de 50%. La transparence des pixels de la ligne L1 est par exemple de l'ordre de 75%. Ces transitions sont visibles dans une zone 31, qui correspond à une portion de l'écran agrandie pour la clarté de l'illustration. Les pixels de l'OSD symbolisés à la figure 3 par des carrés laissent ainsi progressivement la place aux pixels de l'image vidéo, symbolisés par des ronds, qui apparaissent petit à petit par transparence.

Cette technique d'incrustation d'image est connue et permet de limiter les effets de scintillement et de tremblement lorsqu'on affiche des OSD sur une image vidéo. Lorsque plusieurs lignes d'un OSD ont les mêmes valeurs pour les informations de luminance et de chrominance, et qu'elles ne diffèrent que par leur valeur de transparence, il faut malgré tout mémoriser chacune de ces valeurs dans la table de couleurs disponibles. Par exemple, à la figure 3, si les trois lignes de l'OSD 30 L1, L2 L3, sont rouges, il faudra conserver pour chaque ligne L1, L2, L3, dans la table de couleurs disponibles, les valeurs qui permettent de définir cette couleur rouge associée à leur transparence respective. Or une table de couleurs disponibles est de taille très réduite. Elle est le plus souvent limitée en terme de capacité de mémoire à 256 couleurs, chaque couleur étant habituellement codée sur 30 bits: trois groupes de 8 bits pour les valeurs Y, U et V et un groupe de 6 bits pour la transparence MW.

Dans l'exemple précédent, trois lignes de mémoire de l'OSD sont donc occupées pour la seule définition d'un rouge avec des transparences différentes. Ainsi, plus on veut intervenir sur la transparence des pixels d'un OSD, plus le nombre de couleurs disponibles est limité. La qualité d'un OSD est par conséquent diminuée.

Dans l'état de la technique, on peut citer les documents US-A-5 282 037 et EP-A-0 330 732, qui se rapportent à une technique d'incrustation basée sur l'utilisation d'une table des couleurs disponibles et de coefficients de transparence stockés dans une table. Cependant, chacun des coefficients est associé avec une couleur spécifique pami les couleurs disponibles stockées dans la table.

Le problème est résolu par l'invention en ce qu'elle présente un procédé d'amélioration du chromatisme des OSD sur une image vidéo, le nombre de couleurs disponibles pour créer l'OSD étant augmenté tout en conservant la possibilité d'intervenir sur la transparence de chaque couleur.

Le procédé selon l'invention fait intervenir un registre programmable intervenant sur la transparence d'une ligne de pixels d'un OSD. La transparence de chaque pixel n'a ainsi plus à être mémorisée dans la table de couleurs disponibles. Il est possible, avec le procédé selon l'invention, de définir lors de l'affichage d'un OSD la transparence globale de la ligne de pixels de l'OSD. Le procédé selon l'invention s'applique plus particulièrement au procédé d'amélioration de transition verticale impliquant des OSD lorsque les lignes de l'OSD constituant les frontières entre l'OSD et l'image vidéo sont définies par une unique couleur de la table de couleurs disponibles.

L'invention a donc pour objet un procédé d'amélioration du chromatisme des OSD sur une image vidéo caractérisé en ce qu'il comprend les étapes suivantes:
- des couleurs, qui seront utilisées pour afficher chaque pixel d'un OSD, sont mémorisées dans une table de couleurs disponibles sous la forme de trois valeurs significatives de la chrominance et de la luminance;
- chaque ligne de pixels de l'OSD est associée à un coefficient de transparence spécifique qui lui est attribuée avant une insertion dans l'image vidéo et qui est mémorisé dans un registre de programmation de la transparence ; les coefficients mémorisés sont utilisés à contrôler par lignes de pixels la transparence des pixels.

Il faut préciser qu'une ligne d'un OSD correspond le plus souvent à une portion de ligne de l'écran.

Les différents aspects et avantages de l'invention apparaîtront plus clairement dans la suite de la description en référence aux figures qui ne sont données qu'à titre indicatif et nullement limitatif de l'invention et qui sont à présent introduites:
- La figure 1, déjà décrite, montre une structure courante du code d'un OSD.
- Les figures 2a et 2b déjà décrites, illustrent respectivement les problèmes de scintillement et de tremblement lors de l'affichage d'un OSD sur un fond d'image vidéo.
- La figure 3, également déjà décrite , montre un exemple d'amélioration de transition verticale entre un OSD et une image vidéo en intervenant sur la transparence des pixels de l'OSD.
- La figure 4 est une réalisation préférée d'un circuit permettant de mettre en oeuvre le procédé selon l'invention.

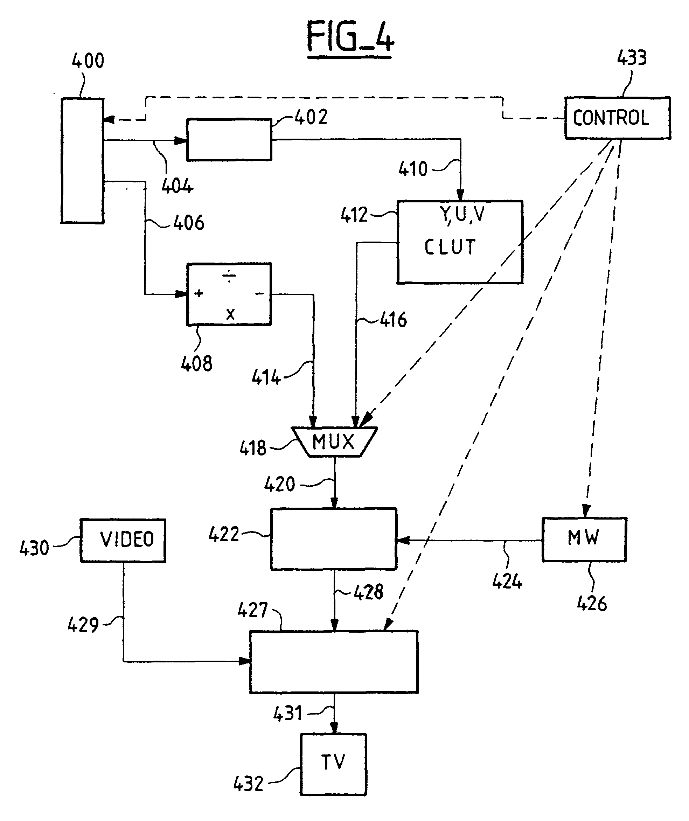

A la figure 4, une interface de programmation 400 de l'OSD est connectée à un module de mémoire 402 au moyen d'un premier bus de données 404. Un deuxième bus de données 406 assure d'autre part la connexion entre l'interface de programmation 400 et une interface de traitement 408. A la sortie du module de mémoire 402, un bus de communication 410 est connecté à une table de couleurs disponibles 412. Un troisième bus de données 414 et un quatrième bus de données 416, issus respectivement de l'interface de traitement 408 et de la table de couleurs disponibles 412, constituent les entrées d'un multiplexeur 418. A la sortie du multiplexeur 418, les données sont véhiculées par un cinquième bus de données 420 vers un module de traitement 422.

Un bus de commande 424 assure la communication entre un registre de programmation de la transparence 426 et le module de traitement 422. Les données issues du module de traitement 422 sont communiquées à un module d'insertion d'OSD 427 au moyen d'un sixième bus de données 428. Un signal vidéo 430 est également fourni au module d'insertion d'OSD 427 par une liaison 429. Enfin, une liaison 431 permet l'échange d'informations entre le module d'insertion d'OSD 427 et un récepteur de télévision 432. Une unité de contrôle 433 gère les opérations effectuées par l'interface de programmation 400, le multiplexeur 418, le registre de programmation de la transparence 426, et le module d'insertion d'OSD 427.

Le circuit de la figure 4, permet de mettre en oeuvre le procédé selon l'invention de la façon suivante: un OSD est programmé grâce à l'interface de programmation 400.

Cette interface de programmation permet de définir l'en-tête de l'OSD, les couleurs qui seront utilisées pour afficher l'OSD, et, pour chaque pixel de l'OSD, les valeurs Y, U et V de la luminance et de la chrominance. Par ailleurs, dans la table de couleurs disponibles 412, seules les valeurs de la luminance et de la chrominance sont mémorisées. Un gain de place en mémoire est ainsi effectué : d'une part, les bits de programmation de la transparence ne sont plus stockés dans la table 412. Ceci permet généralement un gain de place de mémoire de l'ordre de 20 %. D'autre part, il n'est plus nécessaire de conserver plusieurs fois en mémoire une même couleur qui pourrait avoir des niveaux de transparence différents. Le gain de place en mémoire est ici très important.

Les lignes de pixels de l'OSD qui doivent subir l'application d'un filtre mathématique sont traitées par l'interface de traitement 408. Les lignes de pixels de l'OSD qui n'ont pas à subir de tels traitements sont mémorisés dans le module de mémoire 402. En fait, pour chaque pixel, seule l'adresse de la ligne mémoire appropriée de la table de couleurs disponibles est mémorisée. Pour chaque pixel de l'OSD non traité par l'interface de traitement 408, la table de couleurs disponibles 412 est désignée par les adresses des lignes mémoires contenues dans le module de mémoire 402.

Le quatrième bus de données 416, en sortie de la table de couleurs disponibles, véhicule les valeurs Y, U et V pour chaque pixel sous forme de données binaires. Le multiplexeur 418, qui est régi par l'unité de contrôle 433, transmet au module de traitement 422, soit les valeurs Y, U et V de luminance et de chrominance issues de l'interface de traitement 408, soit les valeurs Y, U et V de luminance et de chrominance issues de la table de couleurs disponibles 412. Le registre de programmation de la transparence 426, qui est directement programmable par le concepteur de l'OSD, permet alors d'intervenir sur la transparence de chacune des lignes de l'OSD grâce au bus de commandes 424.

Une transparence spécifique est ainsi associée à chaque ligne de pixel de l'OSD. Chaque ligne de l'OSD ayant été traitée dans le module de traitement 422, l'OSD peut être affiché sur l'image vidéo selon des moyens connus: l'OSD est inséré à l'image vidéo dans le module d'insertion d'OSD 427, puis est transmis par la liaison 431 qui peut être une liaison câblée ou hertzienne vers un poste de télévision 432.

Le module de traitement 422 permet donc de traiter ligne par ligne le niveau de transparence d'une ligne de pixels de l'OSD. Ainsi, selon le procédé de l'invention, chaque ligne de l'OSD a une transparence déterminée par le registre de programmation de la transparence. En général, seules les lignes de pixels de l'OSD qui sont proches de lignes de pixels de l'image vidéo d'origine se verront attribuer une transparence non nulle. L'attribution de la transparence pour chaque ligne de l'OSD peut être effectuée automatiquement par le registre de programmation de la transparence. En effet, ce dernier peut éventuellement contenir en mémoire des valeurs par défaut. Des valeurs de transparence peuvent ainsi être attribuées à n lignes de l'OSD constituant la zone frontière préalablement définie, de façon à produire une transition du type de celle présentée à la figure 3. Le nombre de lignes de la zone frontière n'est évidemment pas limitée à trois. D'autre part, les coefficients de transparence peuvent éventuellement être attribués selon des règles préétablies et mémorisées dans le registre de programmation de la transparence.

Les éléments essentiels du circuit électronique permettant de mettre en oeuvre le procédé selon l'invention sont notamment :
- la table de couleurs disponibles (412) pour mémoriser, pour chaque pixel de l'OSD à afficher, la couleur du pixel sous forme d'information de luminance et de chrominance ;
- le registre de programmation (426) de la transparence pour affecter un niveau de transparence à chaque ligne de pixels de l'OSD.

Le procédé selon l'invention permet ainsi d'améliorer la qualité des transitions verticales entre les lignes de pixels d'un OSD et les lignes de pixels d'une image vidéo d'origine, tout en rendant disponible pour la définition de l'OSD une gamme de couleurs importante.

## Revendications

1. Procédé d'amélioration du chromatisme des OSD sur une image vidéo **caractérisé en ce qu'**il comprend les étapes suivantes:
- des couleurs qui seront utilisées pour afficher chaque pixel d'un OSD sont mémorisées dans une table de couleurs disponibles (412) sous la forme de trois valeurs significatives de la chrominance et de la luminance ;
- chaque ligne de pixels de l'OSD est associée à un coefficient de transparence spécifique qui lui est attribué avant une insertion dans l'image vidéo et qui est mémorisé dans un registre (426) de programmation de la transparence; les coefficients mémorisés sont utilisés à contrôler (422, 427) par lignes de pixels la transparence des pixels de l'OSD à afficher.

2. Procédé d'amélioration du chromatisme des OSD sur une image vidéo selon la revendication 1 **caractérisé en ce que** l'attribution du coefficient de transparence s'effectue selon des valeurs par défaut mémorisées dans le registre de programmation de la transparence.

3. Procédé d'amélioration du chromatisme des OSD sur une image vidéo selon l'une des revendications 1 ou 2 **caractérisé en ce que** les coefficients de transparence sont attribués selon des règles préétablies et mémorisées dans le registre de programmation de la transparence.

4. Circuit électronique permettant de mettre en oeuvre le procédé selon l'invention selon l'une quelconque des revendications précédentes, **caractérisé en ce qu'**il comprend notamment :
- une table de couleurs disponibles (412) pour mémoriser, pour chaque pixel de l'OSD à afficher, la couleur du pixel sous forme d'information de luminance et de chrominance ;
- un registre de programmation (426) de la transparence pour mémoriser un coefficient de transparence spécifique associé à chaque ligne de pixels de l'OSD;
- des moyens (422, 427) pour contrôler par lignes de pixels la transparence des pixels de l'OSD à afficher en utilisant les coefficients mémorisés.

## Claims

1. Method for improving the chromatism of OSDs on a video picture, ***characterised in that*** it comprises the following steps:
- colours which will be used to display each pixel of an OSD are stored in a table of available colours (412) in the form of three relevant values for the chrominance and the luminance;
- each line of pixels of the OSD is associated with a specific coefficient of transparency which is assigned to it before insertion in the video picture and which is stored in a transparency programming register (426);
- the stored coefficients are used to control (422, 427) the transparency of the pixels of the OSD to be displayed one line of pixels at a time.

2. Method for improving the chromatism of OSDs on a video picture according to claim 1, ***characterised in that*** the assignment of the coefficient of transparency is effected according to default values stored in the transparency programming register.

3. Method for improving the chromatism of OSDs on a video picture according to one of claims 1 or 2, ***characterised in that*** the coefficients of transparency are assigned according to preestablished rules stored in the transparency programming register.

4. Electronic circuit permitting the implementation of the method according to the invention according to any one of the preceding claims, ***characterised in that*** it comprises in particular:
- a table of available colours (412) to store for each pixel of the OSD to be displayed the colour of the pixel in the form of luminance and chrominance information;
- a transparency programming register (426) for storing a specific coefficient of transparency associated with each line of pixels of the OSD;
- means (422, 427) for controlling the transparency of the pixels of the OSD to be displayed one line of pixels at a time using the stored coefficients.

## Patentansprüche

1. Verfahren zur Verbesserung der chromatischen Abweichung eines OSD auf einem Videobild, **dadurch gekennzeichnet, dass** dieses die folgenden Schritte umfasst:
- Farben, die verwendet werden, um jeden Bildpunkt eines OSD darzustellen, werden in einer Tabelle (412) verfügbarer Farben in Form von drei Werten gespeichert, die für den Farbwert und die Leuchtdichte signifikant sind;
- jede Zeile von Bildpunkten des OSD wird mit einem Koeffizienten der spezifischen Transparenz verbunden, der dieser vor einer Einfügung in das Videobild zugeordnet wird und der in einem Register (426) zur Transparenzprogrammierung gespeichert wird; wobei die gespeicherten Koeffizienten dazu verwendet werden, mit Hilfe von Bildzeilen die Transparenz der Bildpunkte des darzustellenden OSD zu steuern.

2. Verfahren zur Verbesserung der chromatischen Abweichung eines OSD auf einem Videobild gemäß Anspruch 1, **dadurch gekennzeichnet, dass** die Zuordnung des Transparenzkoeffizienten entsprechend von Fehlwerten erfolgt, die in dem Register zur Transparenzprogrammierung gespeichert sind.

3. Verfahren zur Verbesserung der chromatischen Abweichung eines OSD auf einem Videobild gemäß einem der Ansprüche 1 oder 2, **dadurch gekennzeichnet, dass** die Transparenzkoeffizienten gemäß vorgefasster Regeln zugeordnet und in dem Register zur Transparenzprogrammierung gespeichert werden.

4. Elektronischer Schaltkreis zur Durchführung des Verfahrens gemäß der Erfindung nach einem der vorstehenden Ansprüche, **dadurch gekennzeichnet, dass** dieser insbesondere aufweist:
- eine Tabelle verfügbarer Farbwerte (412), um für jeden Bildpunkt des darzustellenden OSD die Farbe des Bildpunktes in Form einer Information über Leuchtdichte und Farbwert zu speichern;
- ein Register (426) zur Transparenzprogrammierung, um einen spezifischen Transparenzkoeffizienten zu speichern, der mit jeder Bildzeile des OSD verbunden ist;
- Mittel (422, 427), um mit Hilfe von Bildzeilen die Transparenz der Bildpunkte des darzustellenden OSD unter Verwendung der gespeicherten Koeffizienten zu steuern.
